(19) **Europäisches Patentamt / European Patent Office / Office européen des brevets**

(11) **EP 2 923 183 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **13792881.8**

(22) Anmeldetag: **12.11.2013**

(51) Int Cl.:
**G01F 1/66** (2006.01)

(86) Internationale Anmeldenummer:
**PCT/EP2013/073582**

(87) Internationale Veröffentlichungsnummer:
**WO 2014/079733 (30.05.2014 Gazette 2014/22)**

(54) **ULTRASCHALL-DURCHFLUSSMESSGERÄT**

ULTRASONIC FLOW RATE MEASURING DEVICE

DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2012 DE 102012111427**

(43) Veröffentlichungstag der Anmeldung:
**30.09.2015 Patentblatt 2015/40**

(73) Patentinhaber: **Endress+Hauser Flowtec AG**
**4153 Reinach (CH)**

(72) Erfinder:
• **WIEST, Achim**
**79576 Weil am Rhein (DE)**

• **BRUMBERG, Oliver**
**79618 Rheinfelden (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**DE-A1- 3 542 704     DE-A1- 19 810 798**
**US-A- 6 112 601**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Ultraschall-Durchflussmessgerät, nach dem Oberbegriff des Anspruchs 1.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen.

Die bekannten Ultraschall-Durchflussmessgeräte arbeiten häufig nach dem Laufzeitdifferenz-Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Aus der Laufzeitdifferenz lässt sich die Fließgeschwindigkeit und damit bei bekanntem Durchmesser des Rohrleitungsabschnitts der Volumendurchfluss bestimmen.

Die Ultraschallwellen werden mit Hilfe so genannter Ultraschallwandler erzeugt bzw. empfangen. Hierfür sind Ultraschallwandler in und/oder an der Rohrwandung des betreffenden Rohrleitungsabschnitts fest angebracht. Es sind auch Clamp-on-Ultraschall-Durchflussmesssysteme erhältlich. Bei diesen Systemen werden die Ultraschallwandler von außerhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt. Die Übertragung zwischen dem Ultraschallwandler und einer entsprechenden Messelektronik erfolgt über eine Sendestufe, welche als sogenannte Push-Pull Stufe ausgebildet ist. Ausgehend von dieser Sendestufe erfolgt eine Signalübertragung einer Versorgungsspannung über einen Widerstand bzw. eine Impedanz an einen Ultraschallwandler im Sendezustand.

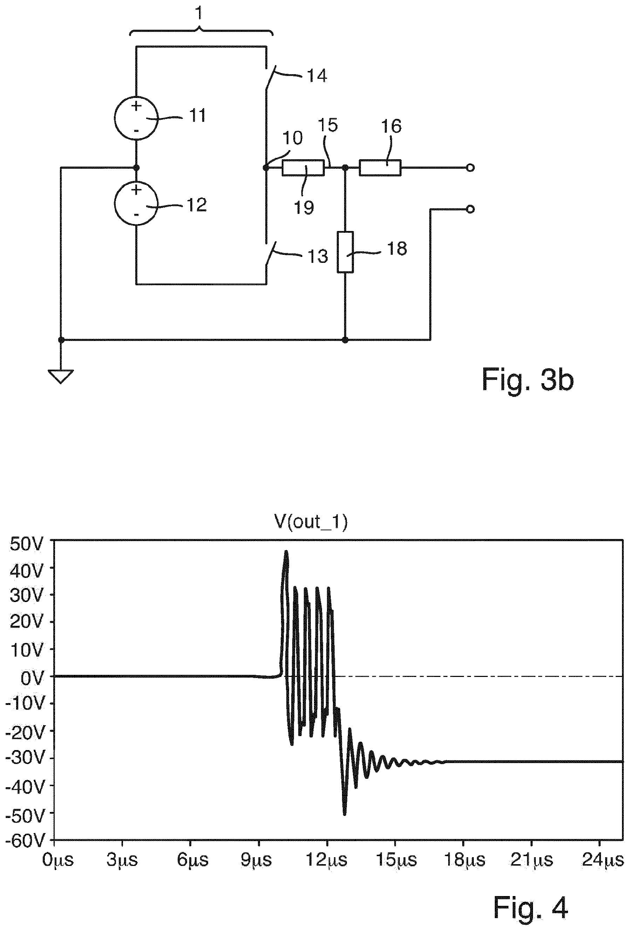

Problematisch ist, dass nach dem letzten Sendepuls der Ausgang der Push-Pull Stufe hochohmig ist, was zu einer Einpegelung der Ausgangsspannung um einen Wert deutlich über / oder unter Null Volt führt, wie dies in Fig. 4 gezeigt wird.

Die Aufgabe der Erfindung besteht darin, ein Ultraschall-Durchflussmessgerät bereitzustellen, welches einen Sender mit einer möglichst konstanten Ausgangsimpedanz aufweist und wobei der Sender einen Generator umfasst zum Erzeugen einer Sendespannung welcher eine sich ändernder Impedanz aufweist. Insbesondere soll eine möglichst weiter Frequenzbereich abgedeckt werden und die Unabhängigkeit der Impedanz des Senders von der Impedanz des angeschlossenen Wandlers erreicht werden.

Ein Ultraschall-Durchflussmessgerät mit zugehöriger Schaltungsanordnung ist aus DE 198 10 798 A1 bekannt.

Die Aufgabe der Erfindung besteht insbesondere darin, ein Ultraschall-Durchflussmessgerät bereitzustellen, welches ein besseres Schwingverhalten des Piezokristalls eines Ultraschalldurchflussmessersermöglicht.

Die Erfindung löst diese Aufgabe durch ein Ultraschall-Durchflussmessgerät mit den Merkmalen des Anspruchs 1.

Erfindungsgemäß weist ein Ultraschall-Durchflussmessgerät zumindest einen Sender bzw. eine Sendestufe auf, welcher ein wechselndes Anregungssignal generiert. Dieses Anregungssignal kann beispielsweise eine Sendespannung sein und wird beispielsweise zur Umwandlung in ein elektromagnetisches Feld, insbesondere ein Mikrowellensignal, ein Ultraschallsignal oder optisches Signal verwendet. Insbesondere besteht das Ultraschall-Durchflussmessgerät mindestens aus einem Ultraschallwandler. Dabei weist der Sender des Durchflussmessgerätes zudem Generator zum Erzeugen eines wechselnden Ausgangssignals, beispielsweise eine Sendespannung, und eine Sendestufe auf, wobei die Messelektronik über die Sendestufe zumindest mit dem ersten Ultraschallwandler verbunden ist.

Ein entsprechender Generator weist in seiner einfachsten Ausgestaltungsform zumindest eine Spannungsquelle und zumindest einen Schalter oder einen veränderbaren Widerstand auf.

Ein Ausgang der Sendestufe ist über einen ersten Signalpfad, in dem sich ein Widerstandsnetzwerk befindet an den Ultraschallwandler angeschlossen, wobei der erste Signalpfad ein erstes Widerstandselement aufweist. Erfindungsgemäß vom ersten Signalpfad ein zweiter Signalpfad abzweigt, wobei der zweite Signalpfad ein einseitig- masseverbundenes zweites Widerstandelement aufweist, wobei der zweite Signalpfad vom ersten Signalpfad zwischen dem Ausgang der Sendestufe und dem ersten Widerstandselement abzweigt.

Durch eine entsprechende Einstellung der Widerstandselemente gelingt eine reziprokere Signalform der Ausgangsspannung beim Senden im Vergleich zur Signalform beim Empfang als mit einem einzigen Widerstand im Signalpfad oder einer voreingestellten Größe, also Signale mit geringer Abweichung oder nahezu identischer Signalform.

Durch eine entsprechende Wahl der Widerstandselemente gelingt es, die Ausgangsimpedanz des Senders und die Eingangsimpedanz des Empfängers ideal zu paaren, so dass das Reziprozitätstheorem quasi eingehalten wird. Mit dem Theorem wird quasi maximale Nullpunktsstabilität erreicht.

Vorteilhafte Ausgestaltungen der Erfindung sind Gegenstand der Unteransprüche.

Der der Generator zum Erzeugen zweier unterschiedlicher Spannungen, z.B einer pos. und einer neg. Spannung besteht vorzugsweise aus zwei Schaltern, deren Eingang mit unterschiedlichen Spannungspotentialen verbunden ist. Der Ausgang der Schalter ist miteinander verbunden. Zusammen mit dem (daran angeschlossenen) Anpassungsnetzwerk bilden sie die Sendestufe, welches so ausgeführt ist, dass der Ersatzwiderstand des Netzwerkes möglichst dem Widerstand des Empfängers entspricht - unabhängig von den Schalterstellungen. Praktisch muss ein Kompromiss zwischen "Match" und Stromverbrauch gefunden werden.

Eine besonders hohe Phasen- oder Nullpunktstabilität kann vorteilhaft dadurch erreicht werden, indem der erste Signalpfad zwischen dem Ausgang der Sendestufe und dem ersten Widerstandselement zumindest ein Widerstandsnetzwerk aufweist, wobei das Widerstandsnetzwerk das einseitig-masseverbundene zweite Widerstandselement umfasst. Im vorliegenden Fall ermöglicht das Widerstandsnetzwerk eine verbesserte Nullpunktstabilität bei der Messung.

Es ist von Vorteil, wenn der zweite Ultraschallwandler über eine Empfangsstufe mit dem Generator verbunden ist und wobei zwischen der Sendestufe und dem ersten Ultraschallwandler eine erste Impedanz angeordnet ist und wobei zwischen der Empfangsstufe und dem Generator eine zweite Impedanz angeordnet ist und wobei das Widerstandsnetzwerk und das erste Widerstandselement die erste Impedanz bildet, welche um weniger als 100%, vorzugsweise weniger als 10%, besonders bevorzugt weniger als 2%, insbesondere weniger als 0,5% von der zweiten Impedanz abweicht. Dadurch wird ein besonders reproduzierbarer (bevorzugter reziproker) Verlauf beim Schwingverhalten beim Senden und Empfangen des Piezokristalls ermöglicht/erreicht.

Es ist weiterhin von Vorteil, wenn das Widerstandsnetzwerk ein drittes Widerstandselement aufweist, wobei ein Widerstandswert des zweiten Widerstandselements zu einem Widerstandswert des dritten Widerstandselements ein Verhältnis von 2:1 bis 10000:1, vorzugsweise 3:1 bis 100:1, besonders bevorzugt 4,5:1 bis 10:1, aufweist.

Das Widerstandsnetzwerk kann vorteilhaft ein drittes Widerstandselement aufweisen, wobei der Faktor aus einem Widerstandswert des zweiten Widerstandselements zu der Summe der Widerstandswerte des zweiten und des dritten Widerstandselements des Widerstandsnetzwerkes mehr als 0,2, vorzugsweise mehr als 0,75 beträgt. Bei den vorgenannten Verhältnissen tritt nur ein geringer Verlust an elektrischer Spannung auf. Für die Auslegung helfen Fig. 10 .. Fig. 16 am Beispiel einer 50 Ohm Anpassung

Um einen vergrößerten Messbereich des Ultraschallmessgerätes abzudecken, kann dieses vorteilhaft mit einem Frequenzbereich zwischen 0.05 bis 100 MHz betrieben werden.

Ein durch die Messelektronik gesteuerten Multiplexer kann zwischen mehreren Wandlern und mindestens einem Generator der Sendestufe sowie mindestens einer Empfangsstufe umschalten

Der Ultraschallwandler kann über einen weiteren, ebenfalls durch die Messelektronik gesteuerten Multiplexer, an eine weitere Sendestufe oder auch nur an einen weiteren Generator angeschlossen, der zusammen mit dem Innenwiderstand der Sendestufe die Eingangsimpedanz bildet. Bei der Wahl der Widerstandswerte in den Signalpfaden können die typischen Impedanzen der Schalter und Spannungsquellen berücksichtigt werden.

Das Durchflussmessgerät besitzt typischerweise eine 5 bis 20-fach bessere Nullpunktstabilität gegenüber einem Durchflussmessgerät mit einer Sendestufe ohne nachgeordnetes Widerstandsnetzwerk. Folglich weisen die Messwerte eine höhere Genauigkeit bzw. eine geringere Streuung auf.

Das Ultraschall-Durchflussmessgerätes kann insbesondere als batteriebetriebenes Ultraschall-Durchflussmessgerät, Zweileiter-Ultraschall-Durchflussmessgerät und/oder in explosionsgeschützten Bereichen eingesetzt werden, da der Energieverbrauch gegenüber einer bezüglich dem Nullpunkt vergleichbaren Lösung mit Operationsverstärker im gepulsten Sendebetrieb typischerweise deutlich geringer ausfällt.

Typische Puls-Pausen-Verhältnisse liegen bei > 1:100.

Bevorzugte Ausführungsbeispiele der Erfindung werden anhand der nachfolgenden Zeichnungen näher erläutert. Sie zeigen:

Fig. 1     Schematischer Aufbau einer Schaltung eines Ultraschallmessgerätes;

Fig. 2     schematischer Aufbau einer Schaltung mit einer als Sendestufe ausgebildeten push-pull Endstufe nach dem Stand der Technik;

Fig. 3a     schematischer Aufbau einer ersten erfindungsgemäßen Schaltung einer als Sendestufe ausgebildeten push-pull Endstufe mit nachgeordnetem einseitig-masseverbundenem Widerstand;

Fig. 3b     schematischer Aufbau einer zweiten erfindungsgemäßen Schaltung einer als Sendestufe ausgebildeten push-pull Endstufe mit erfindungsgemäß modifiziertem Ausgang;

Fig.4     Ausgangsspannung mit Push-Pull Stufe nach Stand der Technik; und

Fig.5     Ausgangsspannung nach Push-Pull Stufe nach erfindungsgemäßer Modifikation der Fig. 3a;

Fig. 6     Ausgangsspannung nach Push-Pull Stufe nach erfindungsgemäßer Modifikation der Fig. 3b;

Fig. 7     vergrößerte Ansicht des Ausschwingverhaltens der Ausgangsspannungen der Fig. 5 und 6; und

Fig. 8  Ersatzschaltbild eines Piezokristalls

Ausgehend von der Laufzeitdifferenzmethode zur Ermittlung einer Durchflussgeschwindigkeit mittels Ultraschallwandler ist bereits bekannt, dass ein Ultraschallwandler eines Ultraschall-Durchflussmessgerät zumindest über zwei Betriebszustände verfügt, einem Sendezustand und einem Empfangszustand. Für das bessere Verständnis der Erfindung wird für die beschriebenen Ultraschallwandler jeweils nur ein Betriebszustand näher erläutert. Es versteht sich allerdings von selbst, dass ein entsprechender Ultraschallwandler im Sendezustand auch auf einen Empfangszustand und umgekehrt ein Ultraschallwandler im Empfangszustand in den Sendezustand umgeschaltet werden kann, so dass ein Ultraschallgerät derart ausgestaltet ist, dass eine Sendestufe auch als Empfangsstufe und eine Empfangsstufe auch als Sendestufe fungieren kann.

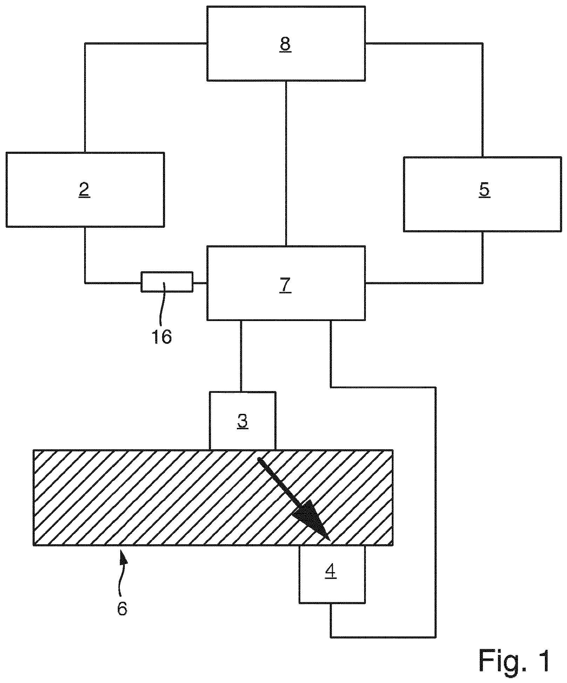

Fig. 1 zeigt eine an sich bekannte Schaltung eines Ultraschall-Durchflussmessgerätes, welches insbesondere nach der Laufzeitdifferenzmethode arbeitet. Der grundlegende Aufbau eines solchen Gerätes und die Methode der Laufzeitdifferenzmethode sind seit langem bekannt. Ausgehend von einer Messelektronik 8 wird ein Eingangssignal als Spannungssignal über einen ersten Verstärker bzw. eine Sendestufe 2, ein erstes Widerstandselement 16 und einen Multiplexer 7 an einen ersten einseitig-geerdeten Ultraschallwandler 3, welcher sich im Sendezustand befindet, weitergegeben. Dieser erste Ultraschallwandler 3 ist als Piezowandler ausgebildet und sendet bei Empfang des Spannungssignals ein Ultraschallsignal an einen zweiten einseitig-geerdeten Ultraschallwandler 4, welcher sich im Empfangszustand befindet, aus. Zum Umschalten der Wandler 3 und 4 vom Sende- in dem Empfangsbetrieb kann ein Multiplexer 7 vorgesehen sein, welcher mit den Wandlern 3 und 4, der Empfangsstufe 5 und der Sendestufe 2 verbunden ist. der zweite Wandler 4 empfängt dabei das akustische Messsignal und gibt dieses Signal in Form einer Ausgangsspannung über den Multiplexer 7 und eine Empfangsstufe 5 an die Messelektronik 8 weiter.

Das akustische Messsignal wird dabei in ein Messrohr 6 und ein darin befindliches Medium eingeleitet und wird dabei als sogenanntes Burstpaket übermittelt und besteht beispielsweise aus fünf Vollwellen. Diese werden mehrfach gesendet. Der zweite Ultraschallwandler 4 wandelt das akustische Signal in ein Spannungssignal um und führt dieses Spannungssignal der Messelektronik 1 zu.

Schaltungsbedingt ist zwischen der Messelektronik 8 und dem ersten Ultraschallwandler 3 eine erste Impedanz, die sogenannte Eingangsimpedanz, ausgebildet. Zwischen dem zweiten Ultraschallwandler 4 und der Messelektronik 8 ist eine zweite Impedanz, die sogenannte Empfangsimpedanz, ausgebildet.
Der Widerstand 16 ist in Fig 1 aus der Sendestufe 2 herausgenommen und einzeln gezeichnet.

Als optimale Lösung hat sich herausgestellt, wenn die erste und der zweite Impedanz beim Senden und Empfangen, also die sogenannte Ausgangs- und Eingangsimpedanz, annähernd gleich groß sind. Diese Lösung hat sich insbesondere als günstig erwiesen, da die Phasenstabilität der Messung oder der Nullpunkt des Durchflusses klein und stabil ist.

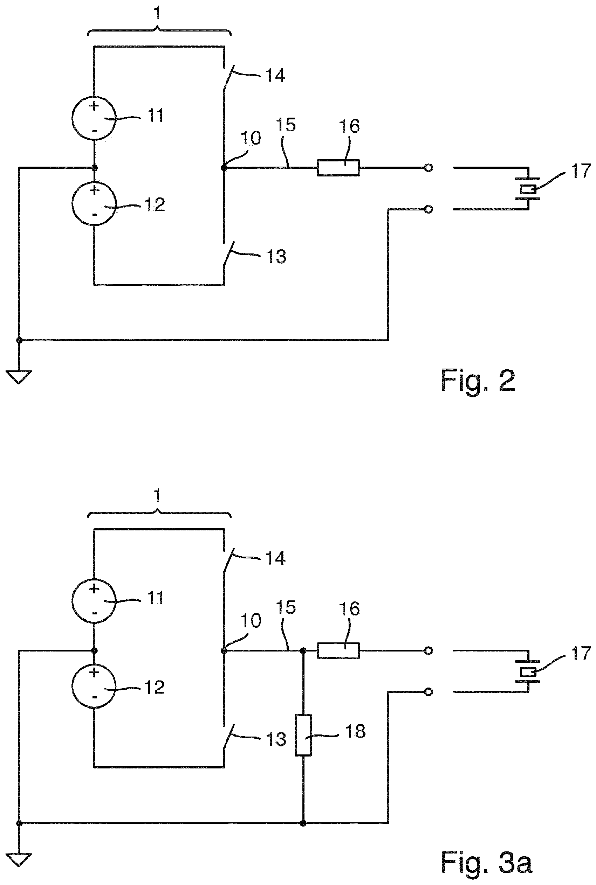

Der vorbeschriebene Vorteil eines stabilen Nullpunktes stehen allerdings eine erhöhte Stromaufnahme und ein höherer Platzbedarf für Bauteile zur Erzeugung des Sendesignals gegenüber. Üblicherweise wird eine hohe Spannung durch entsprechende Halbleitertransistoren realisiert - welche zwischen einer positiven und einer negativen Versorgungsspannung hin- und herschalten. Ein stark vereinfachter Schaltkreis wie sie aus dem Stand der Technik bekannt ist, wird in Fig. 2 dargestellt. Er weist einen Ausgang 10 der Sendestufe und eine erste Spannungsversorgungsquelle 11 auf zur Versorgung des Ultraschallwandlers 3 mit einer Spannung, sowie eine zweite Spannungsversorgungsquelle 12 zur Versorgung des Ultraschallwandlers 3 mit einer Spannung mit umgekehrter Polarität zur Spannung der ersten Spannungsversorgungsquelle 11. Zwischen dem Ausgang 10 der Sendestufe bzw. push-pull Stufe und einer jeden Spannungsversorgungsquelle 11 oder 12 sind jeweils ein Schalter 13 oder 14, also ein der ersten Spannungsversorgungsquelle 11 zugeordneter Schalter 13 und ein der zweiten Spannungsversorgungsquelle 12 zugeordneter Schalter 14 angeordnet. Der Ausgang der Sendestufe ist durch einen ersten Signalpfad 15 mit dem Ultraschallwandler 3 verbunden.

Die Gesamtheit aus dem Ausgang 10, den Spannungsversorgungsquellen 12 und 11 und den Schaltern 13 und 14 wird nachfolgend als Generator 1 bezeichnet.

Der erste Signalpfad 15 weist ein erstes Widerstandselement 16, den sogenannten Ausgangswiderstand, auf. Dieser ist, wie aus Fig. 2, ersichtlich in Reihe geschalten mit der push-pull Stufe bzw. Sendestufe 2 und dem Ultraschallwandler 3.

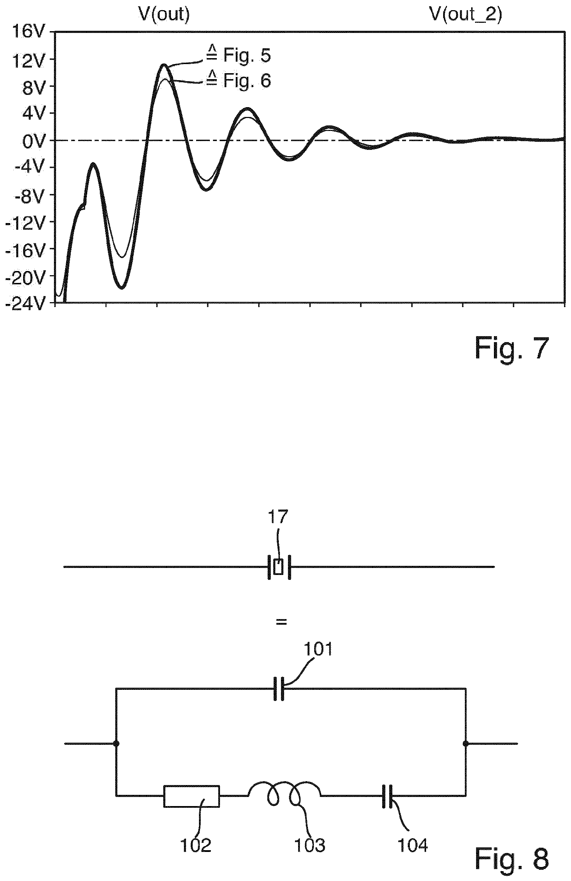

Solche Schaltungen sind dem Fachmann als Push-Pull-Stufen bekannt. Zur Anpassung der Impedanz wird ein Widerstand eingebaut, welcher in etwa dem Eingangswiderstand der Empfangsstufe entspricht. Wie in Fig. 2 dargestellt ist die push-pull Stufe ausgangsseitig mit einer Schaltung 17 des Piezokristalls bzw. des Ultraschallwandlers verbunden. Derartige Piezokristall-Schaltungen sind allerdings vielfach bereits im Stand der Technik beschrieben und werden in der vorliegenden Anmeldung lediglich beispielsweise anhand des Aufbaus des Ersatzschaltbildes Fig. 8 beschrieben. Die entsprechende Piezokristall-Schaltung weist zwei zueinander parallelgeschaltete Kondensatoren 101 und 104 auf und jeweils eine zu einem der Kondensatoren in Reihe geschaltete Spule 103 sowie einen dazu ebenfalls in Reihe geschalteten Widerstand 102.

Problematisch ist, dass nach dem letzten Sendepuls der Ausgang der Push-Pull Stufe hochohmig ist, was zu einer Einpegelung der Ausgangsspannung um einen Wert deutlich über / oder unter Null Volt führt, wie dies in Fig. 4 gezeigt wird.

Damit wird der Piezokristall mit einer Spannung beaufschlagt, was zu einem ungedämpften Ausschwingen des Piezokristalls führt.

Dieses Problem wird erfindungsgemäß dadurch behoben, dass vom ersten Signalpfad 15 zwischen dem ersten Widerstandselement 16 und dem Ausgang der Sendestufe ein zweiter Signalpfad abzweigt mit einem zweiten Widerstandselement 18. Dieses weist eine einseitige Masseverbindung auf. Insgesamt dient die Anordnung des ersten und des zweiten Widerstandselements 16 und 18 zur Abgabe einer Ausgangsspannung an den Ultraschallwandler 3 und stellt die zu Fig. 1 beschriebene erste Impedanz dar. Konkret wird diese geänderte Schaltung mit einem Widerstandsnetzwerk in Fig. 3a dargestellt..

Analog zu Fig. 2 ist auch in Fig. 3a ein erster Signalpfad zwischen den Schaltern 13 und 14 angeordnet. Im Unterschied zur Fig. 2 zweigt allerdings von diesem ersten Signalpfad 15 ein zweiter Signalpfad mit dem einseitig-geerdeten zweiten Widerstandselement 18 ab. Das Verhältnis der Widerstandswerte dieses zweiten Widerstandselements 18 zu dem der Abzweigung des zweiten Widerstandselements 18 nachgeordneten Ausgangswiderstandselements 16, beträgt vorzugsweise weniger als 1:10000, besonders bevorzugt weniger als 1:10, idealerweise zwischen 1:6 bis 1:8. Nachgeordnet bedeutet in diesem Zusammenhang, dass der Ausgangswiderstand 16 zwischen dem Ultraschallwandler 3 bzw. der Schaltung 17 des Piezokristalls und dem Abzweig des Signalpfades mit dem einseitig-geerdeten zweiten Widerstand angeordnet ist. Entsprechend gilt für die Ströme beim Senden $I_{16} < I_{18}$

In einer besonders bevorzugten Ausführungsvariante der Fig. 3b ist der Abzweigung des einseitig-geerdeten zweiten Widerstandselements 18 ein drittes Widerstandselement 19, welches in Reihe zum Ausgangswiderstandselement 16 geschaltet ist, vorgeordnet. Das zweite Widerstandselement 18 bildet zusammen mit dem dritten Widerstandselement in dem bevorzugten Ausführungsbeispiel der Fig. 3b ein Widerstandsnetzwerk aus.

Wie bereits in Fig. 1 erläutert, sollte die Ausgangsimpedanz, also die Summe der dem Ausgang vorgeschalteten Widerstandswerte in etwa gleich groß wie die Eingangsimpedanz sein, wobei die Ausgangsimpedanz in Fig. 3b durch das erste, zweite und dritte Widerstandselement 16, 18, 19 vorgegeben wird. Beträgt die Eingangsimpedanz beispielsweise 50 Ohm, so sollte auch die Ausgangsimpedanz 50 Ohm betragen.

Idealerweise wird diese Ausgangsimpedanz während des Sendens des Burstpaketes und in den Sende-Pausen annähernd gleich gehalten. Hierzu weist das zweite Widerstandselement 18 zum dritten Widerstandselement 19 ein Verhältnis von 2:1 bis 10000:1, vorzugsweise 3:1 bis 100:1, besonders bevorzugt 4:1 bis 10:1 auf.

Nach dem Senden ergibt sich die Ausgangsimpedanz aus der Summe der Widerstandswerte des Ausgangswiderstandselements 16 und des zweiten Widerstandselements 18. Diese Ausgangsimpedanz weicht um weniger als 100%, vorzugsweise weniger als 10%, besonders bevorzugt um weniger als 2% insbesondere weniger als 0,5% von der Eingangsimpedanz ab.

Der Faktor x der verbleibenden Spannung zum Senden in Prozent gegenüber der Lösung nach Fig. 3a kann überschlagsweise bei R18 << R16 anhand des folgenden Verhältnisses ermittelt werden: x=(R18/(R18+R19))*100.

Der Faktor x repräsentiert die verbleibende Spannung und beträgt vorzugsweise mehr als 0,2, vorzugsweise mehr als 0,75 der ursprünglichen Generatorspannung am Punkt 10.

Dieser Spannungsverlust ist eigentlich nachteilig für den Betrieb des Durchflussmessgerätes, allerdings wird dieser Nachteil durch eine verbesserte Nullpunktsstabilität mehr als ausgeglichen.

Der Spannungsverlust kann zudem durch die Sendestufe durch eine höhere Spannung oder durch Anpassen der Verstärkung kompensiert werden.

Insgesamt verbessert sich die Nullpunktstabilität um das 5 bis 20-fache.

Insgesamt kann durch die in Fig. 3a und 3b abgebildete Schaltung ein weiter Frequenzbereich von vorzugsweise zwischen 0.1 bis 10 MHz realisiert werden.

Zudem ist die Verwendung eines entsprechenden Ultraschall-Durchflussmessgerätes in Anwendungen mit geringem Energiebudget, insbesondere für batteriebetriebene Ultraschallmessgeräte und Zweileiter-Ultraschallmessgeräte, möglich. Insbesondere wird durch die Verwendung von passiven Bauelementen nach dem Erzeugen des Bursts keine weitere Energie zur Gewährleistung der Reziprozität mehr benötigt.

In Fig. 4, 5, 6 und 7 ist der zeitliche Verlauf einer Ausgangsspannung bei einer Schaltung gemäß Fig. 2, 3a und Fig. 3b dargestellt.

Dabei zeigt Fig. 4, dass sich die Ausgangsspannung bei einem Spannungswert von -40V einschwingt. Dieses Einschwingen ist gleichzusetzen mit einem Abschalten der push-pull Stufe nach dem Senden eines aus fünf Vollwellen bestehenden Bustsignals. Wie zuvor beschrieben bleibt aufgrund der Schaltung der hochohmige Zustand der letzten Vollwelle erhalten. Um diesen hochohmigen Zustand, welcher je nach geöffnetem Schalter beispielsweise - 40V oder +40 V betragen kann, kommt es zu einem Einschwingen der Spannung.

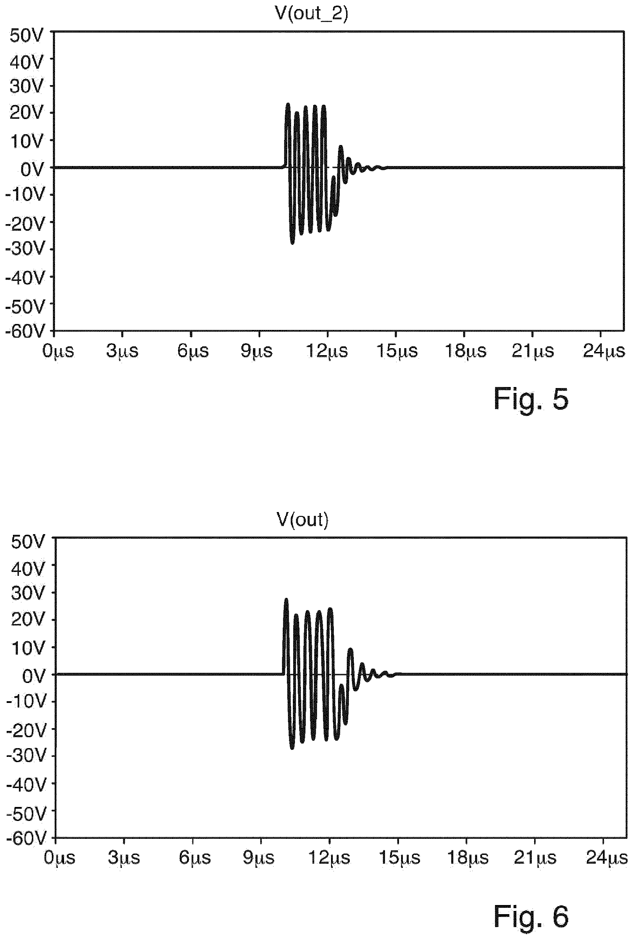

Der in Fig. 5 abgebildete Verlauf zeigt ein asymptotisches Dämpfungsverhalten gegen Null Volt auf, so dass keine Spannung mehr besteht. Dadurch kann ein gedämpftes und vergleichsweise schnelles Ausschwingen des nachgeschalteten Piezokristalls erfolgen.

Alternativ zu einem Einschwingen um Null Volt kann durch entsprechende Einstellung des Widerstandsnetzwerkes ein Einschwingen auf einen vorbestimmten Sollwert erfolgen, welcher einem Innenwiderstand der Sendestufe entspricht.

Das Widerstandsnetzwerk ist prinzipiell in Fig. 3a kein üblicher Spannungsteiler, da aus der Sendestufe über den Widerstand 18 definiert gegen Masse ein Strom fließt. Es kann als Stromteiler verstanden werden. Das Widerstandsverhältnis zu Widerstand 16 ist so gewählt, dass der Strom durch Widerstand 18 um ein vielfaches höher ist als der Strom der durch die Last, den Ultraschallsensor fließt. Das Ziel ist ja, wie im nächsten Abschnitt beschrieben eine nahezu identische Impedanz für beider Ultraschallwandler beim Senden und Empfangen zu jeder Zeit zu gewährleisten. Der zusätzliche Widerstand 19 bewirkt, wie in in Fig. 6 & 7 gezeigt, eine bessere Näherung an das Optimum, wie den folgenden Berechnungen gezeigt wird.

Im Fall der Generatorschaltung nach Fig. 3b und der Ausgangsimpedanzen am Stromteiler des geschlossenen Schalters 14 bzw. alternativ auch 13 gilt bei idealen Spannungsquellen 11 und 12 ohne Innenwiderstand und Schaltern ohne Widerstand folgender Zusammenhang

$$R_i = R16 + \frac{R18 * R19}{R18 + R19}$$

Im Fall von offenen Schaltern 14 und 13 gilt für den Innenwiderstand:

$$R_i = R16 + R18$$

Dies gilt bei einer Schaltung nach Fig. 3a und Fig. 3b
Bei einer Schaltung nach Fig. 3a gilt
Im Fall des geschlossenen Schalters 14 bzw. alternativ auch 13 gilt bei idealen Spannungsquellen 11 und 12 ohne Innenwiderstand und Schaltern ohne Widerstand:
$R_i = R16$

Wie aus einer einfachen Betrachtung gesehen werden kann liegt das Optimum bei R18 = 0 Ohm. Was natürlich keine Lösung darstellt. Also ist das ganze ein Kompromiss mit einem R2<<R3 z.B. 1:8 und dem Leistungsverbrauch.

## Bezugszeichenliste

| 1 | Generator |
|---|---|
| 2 | Sendestufe |
| 3 | erster Ultraschallwandler |
| 4 | zweiter Ultraschallwandler |
| 5 | Empfangsstufe |
| 6 | Messrohr |
| 7 | Multiplexer |
| 8 | Messelektronik |
| 10 | Ausgang |
| 11 | erste Stromversorgungsquelle |
| 12 | zweite Stromversorgungsquelle |
| 13 | Schalter |
| 14 | Schalter |
| 15 | Abgriff |
| 16 | erster Widerstand/Ausgangswiderstand |
| 17 | Schaltung |
| 18 | zweiter Widerstand |
| 19 | dritter Widerstand |

## Patentansprüche

1. Ultraschall-Durchflussmessgerät mit einem Sender zum Erzeugen eines wechselnden Anregungssignals, welcher einen ersten und einen zweiten Ultraschallwandler (3, 4) aufweist, wobei der Sender zudem einen Generator (1) zum Erzeugen des wechselnden Anregungssignals und eine Sendestufe (2) aufweist, wobei der Generator über die Sendestufe (2) zumindest mit dem ersten Ultraschallwandler (3) verbunden ist,
wobei ein Ausgang der Sendestufe (2) über einen ersten Signalpfad an den ersten Ultraschallwandler (3) angeschlossen ist, wobei der erste Signalpfad ein erstes Widerstandelement (16) aufweist,
wobei vom ersten Signalpfad ein zweiter Signalpfad abzweigt, wobei der zweite Signalpfad ein einseitig-masseverbundenes zweites Widerstandelement (18) zur Verringerung von impedanzbedingten Schwankungen des Anregungssignals aufweist, wobei der zweite Signalpfad vom ersten Signalpfad zwischen dem Ausgang der Sendestufe (2) und dem ersten Widerstandselement (16) abzweigt,
**dadurch gekennzeichnet, dass**
der Widerstandswert des zweiten Widerstandselements (18) kleiner ist als der Widerstandswert des ersten Widerstandselements (16), so dass beim Senden ein erster Strom $I_{16}$ über das erste Widerstandselement (16) kleiner ist, als ein zweiter Strom $I_{18}$ über das zweite Widerstandselement (18).

2. Ultraschall-Durchflussmessgerät nach Anspruch 1, wobei das Verhältnis der Widerstandswerte des zweiten Widerstandselements (18) zu dem der Abzweigung des zweiten Widerstandselements (18) nachgeordneten ersten Widerstandselements (16), weniger als 1:10000, besonders bevorzugt weniger als 1:10, idealerweise zwischen 1:6 bis 1:8 beträgt.

3. Ultraschall-Durchflussmessgerät nach Anspruch 1 oder 2,
wobei der Ausgang der Sendestufe (2) zwischen jeweiligen Schaltern (13, 14) von zwei Spannungsversorgungsquellen (11, 12) zur Versorgung des ersten Ultraschallwandlers (3), mit Spannung von entgegengesetzter Polarität angeordnet ist.

4. Ultraschalldurchflussmessgerät nach einem der Ansprüche 1, 2 oder 3,
   wobei der erste Signalpfad zwischen dem Ausgang der Sendestufe (2) und dem ersten Widerstandselement (16) zumindest ein Widerstandsnetzwerk aufweist,
   wobei das Widerstandsnetzwerk eine Verschaltung von zwei oder mehr Widerständen ist und welches Widerstandselement das einseitig-masseverbundene zweite Widerstandselement (18) umfasst.

5. Ultraschall-Durchflussmessgerät nach Anspruch 4,
   wobei der zweite Ultraschallwandler (4), über eine Empfangsstufe (5) mit dem Generator (1) verbunden ist, und
   wobei zwischen der Messelektronik (8) und dem ersten Ultraschallwandler (3) eine erste Impedanz ausgebildet ist,
   wobei zwischen dem zweiten Wandler (4) und der Messelektronik (8) eine zweite Impedanz ausgebildet ist,
   wobei durch das Widerstandsnetzwerk, also eine Verschaltung von zwei oder mehr Widerständen, und das erste Widerstandselement (16) die erste Impedanz derart ausgebildet wird, dass sie um weniger als 50%, vorzugsweise weniger als 5%, besonders bevorzugt weniger als 2%, insbesondere weniger als 0,5% von der zweiten Impedanz abweicht.

6. Ultraschall-Durchflussmessgerät nach Anspruch 4 oder 5,
   wobei das Widerstandsnetzwerk ein drittes Widerstandselement (19) aufweist,
   wobei ein Widerstandswert des zweiten Widerstandselements (18) zu einem Widerstandswert des dritten Widerstandselements (19) ein Verhältnis von 3:1 bis 20:1, vorzugsweise 4:1 bis 15:1, besonders bevorzugt 4,5:1 bis 10:1, aufweist.

7. Ultraschall-Durchflussmessgerät nach einem der vorhergehenden Ansprüche,
   wobei das Feldgerät als Ultraschall-Durchflussmessgerät mit einem Frequenzbereich zwischen 0,05 bis 100 MHz betreibbar ist.

8. Ultraschall-Durchflussmessgerät nach Anspruch 5 oder einem von Anspruch 5 abhängigen Anspruch, welches einen ersten durch die Messelektronik (8) gesteuerten Multiplexer aufweist, zur Schaltung zwischen mehreren Ultraschallwandlern, die mit dem Generator (1) verbunden sind.

9. Ultraschall-Durchflussmessgerät nach Anspruch 5 oder einem von Anspruch 5 abhängigen Anspruch,
   wobei der Ultraschallwandler über einen zweiten, ebenfalls durch die Messelektronik (8) gesteuerten Multiplexer an ein weiteres Widerstandselement angeschlossen ist, das zusammen mit dem Innenwiderstand der Empfangsstufe (5) die zweite Impedanz bildet.

10. Ultraschall-Durchflussmessgerät nach einem der vorhergehenden Ansprüche,
    wobei das Ultraschall-Durchflussmessgerät batteriebetrieben ist.

11. Ultraschall-Durchflussmessgerät nach einem der Ansprüche 1 bis 9,
    wobei das Ultraschall-Durchflussmessgerät ein Zweileiter-Ultraschalldurchflussmessgerät ist.

**Claims**

1. Ultrasonic flowmeter with an emitter for generating a variable excitation signal, said emitter having a first and a second ultrasonic transducer (3, 4), wherein the emitter also comprises a generator (1) designed to generate the variable excitation signal and a transmission stage (2), wherein the generator is connected at least to the first ultrasonic transducer (3) via the transmission stage (2), wherein an output of the transmission stage (2) is connected to the first ultrasonic transducer (3) via a first signal path, wherein the first signal path has a first resistor element (16), wherein a second signal path branches off from the first signal path, where said second signal path has a second resistor element (18) one side of which is connected to ground, said element being designed to reduce impedance-induced fluctuations in the excitation signal, wherein the second signal path branches off from the first signal path between the output of the transmission stage (2) and the first resistor element (16),
   **characterized in that**
   the resistance value of the second resistor element (18) is less than the resistance value of the first resistor element (16), such that during transmission, a first current $I_{16}$ circulating through the first resistor element (16) is less than a second current $I_{18}$ circulating through the second resistor element (18).

2. Ultrasonic flowmeter as claimed in Claim 1,
   wherein the ratio of the resistance values of the second resistor element (18) to the resistance values of the first resistor element (16) situated downstream from the branch of the second resistor element (18) is less than 1:10000, preferably less than 1:10, and ideally is between 1:6 and 1:8.

3. Ultrasonic flowmeter as claimed in Claim 1 or 2,
   wherein the output of the transmission stage (2) is arranged between switches (13, 14) of two power supply sources (11, 12) designed to power the first ultrasonic transducer (3), with a voltage of inverse polarity.

**4.** Ultrasonic flowmeter as claimed in one of the Claims 1, 2 or 3,

wherein the first signal path between the output of the transmission stage (2) and the first resistor element (16) has at least a resistor network,

wherein said resistor network comprises a circuitry of two or more resistors and wherein said resistor element comprises the second resistor element (18) with one side connected to ground.

**5.** Ultrasonic flowmeter as claimed in Claim 4,

wherein the second ultrasonic transducer (4) is connected to the generator (1) via a reception stage (5), and

wherein a first impedance is formed between the measuring electronics unit (8) and the first ultrasonic transducer (3),

wherein a second impedance is formed between the second transducer (4) and the measuring electronics unit (8),

wherein the first impedance is formed by the resistor network - i.e. a circuitry of two or more resistors - and the first resistor element (16) in such a way that it deviates by less than 50 %, preferably by less than 5 %, particularly preferably by less than 2 %, particularly by less than 0.5 %, from the second impedance.

**6.** Ultrasonic flowmeter as claimed in Claim 4 or 5,

wherein the resistor network has a third resistor element (19),

wherein a ratio of a resistance value of the second resistor element (18) to a resistance value of the third resistor element (19) is from 3:1 to 20:1, preferably from 4:1 to 15:1, particularly preferably from 4.5:1 to 10:1.

**7.** Ultrasonic flowmeter as claimed in one of the previous Claims,

wherein the field device can be operated as an ultrasonic flowmeter with a frequency range between 0.05 and 100 MHz.

**8.** Ultrasonic flowmeter as claimed in Claim 5 or a claim dependent on Claim 5,

which has a first multiplexer controlled by the measuring electronics unit (8), said multiplexer being designed to switch between multiple ultrasonic transducers that are connected to the generator (1).

**9.** Ultrasonic flowmeter as claimed in Claim 5 or a claim dependent on Claim 5,

wherein the ultrasonic transducer is connected to another resistor element via a second multiplexer which is also controlled by the measuring electronics unit (8), which, together with the internal resistor of the reception stage (5), forms the second impedance.

**10.** Ultrasonic flowmeter as claimed in one of the previous Claims,

wherein the ultrasonic flowmeter is battery-powered.

**11.** Ultrasonic flowmeter as claimed in one of the Claims 1 to 9,

wherein the ultrasonic flowmeter is a two-wire ultrasonic flowmeter.

**Revendications**

**1.** Débitmètre à ultrasons avec un émetteur destiné à générer un signal d'excitation variable, lequel émetteur comprend un premier et un deuxième convertisseur ultrasonore (3, 4), l'émetteur comprenant en outre un générateur (1) destiné à générer le signal d'excitation variable et un étage d'émission (2), le générateur étant relié par l'intermédiaire de l'étage d'émission (2) au moins avec le premier convertisseur ultrasonore (3),

pour lequel une sortie de l'étage d'émission (2) est raccordée via un premier trajet de signal au premier convertisseur ultrasonore (3), le premier trajet de signal présentant un premier élément résistif (16),

pour lequel un deuxième trajet de signal est dérivé du premier trajet de signal, le deuxième trajet de signal présentant un deuxième élément résistif (18) dont un côté est relié à la masse, lequel élément est destiné à diminuer les fluctuations du signal d'excitation dues à l'impédance, le deuxième trajet de signal étant dérivé du premier trajet de signal entre la sortie de l'étage final (2) et le premier élément résistif (16),

**caractérisé**

**en ce que** la valeur de résistance du deuxième élément résistif (18) est inférieure à la valeur de résistance du premier élément résistif (16), de sorte que lors de l'émission, un premier courant $I_{16}$ circulant à travers le premier élément résistif (16) est inférieur à un deuxième courant $I_{18}$ circulant à travers le deuxième élément résistif (18).

**2.** Débitmètre à ultrasons selon la revendication 1,

pour lequel le rapport entre les valeurs de résistance du deuxième élément résistif (18) et les valeurs de résistance du premier élément résistif (16) situé en aval de la dérivation du deuxième élément résistif (18) est inférieur à 1:10000, de préférence inférieur à 1:10, idéalement compris entre 1:6 et 1:8.

**3.** Débitmètre à ultrasons selon la revendication 1 ou 2, pour lequel la sortie de l'étage d'émission (2) est disposée entre les interrupteurs (13, 14) respectifs de deux sources d'alimentation de tension (11, 12) destinées à l'alimentation du premier convertisseur ultrasonore (3), avec une tension de polarité inverse.

**4.** Débitmètre à ultrasons selon l'une des revendications 1, 2 ou 3,
pour lequel le premier trajet de signal entre la sortie de l'étage d'émission (2) et le premier élément résistif (16) présente au moins un réseau de résistances,
le réseau de résistances comprenant un circuit de deux résistances ou plus, et lequel élément résistif comprend le deuxième élément résistif (18) dont un côté est relié à la masse.

**5.** Débitmètre à ultrasons selon la revendication 4,
pour lequel le deuxième convertisseur ultrasonore (4) est relié par l'intermédiaire d'un étage de réception (5) avec le générateur (1), et
pour lequel une première impédance est formée entre l'électronique de mesure (8) et le premier convertisseur ultrasonore (3),
pour lequel une deuxième impédance est formée entre le deuxième convertisseur (4) et l'électronique de mesure (8),
pour lequel la première impédance est formée, à travers le réseau de résistances, c'est-à-dire un circuit de deux résistances ou plus, et le premier élément résistif (16), de telle sorte qu'elle diffère de moins de 50 %, de préférence de moins de 5 %, particulièrement de préférence de moins de 2 %, notamment de moins de 0,5 %, de la deuxième impédance.

**6.** Débitmètre à ultrasons selon la revendication 4 ou 5,
pour lequel le réseau de résistances comprend un troisième élément résistif (19), pour lequel un rapport entre une valeur de résistance du deuxième élément résistif (18) et une valeur de résistance du troisième élément résistif (19) est de 3:1 à 20:1, de préférence de 4:1 à 15:1, particulièrement de préférence de 4,5:1 à 10:1.

**7.** Débitmètre à ultrasons selon l'une des revendications précédentes,
pour lequel l'appareil de terrain peut être utilisé comme débitmètre à ultrasons avec une gamme de fréquences comprise entre 0,05 et 100 MHz.

**8.** Débitmètre à ultrasons selon la revendication 5 ou une revendication dépendant de la revendication 5,
lequel comprend un premier multiplexeur commandé par l'électronique de mesure (8), lequel multiplexeur est destiné à la commutation entre plusieurs convertisseurs ultrasonores, qui sont reliés avec le générateur (1).

**9.** Débitmètre à ultrasons selon la revendication 5 ou une revendication dépendant de la revendication 5,
pour lequel le convertisseur ultrasonore est raccordé, par l'intermédiaire d'un deuxième multiplexeur, également commandé par l'électronique de mesure (8), à un autre élément résistif qui, en combinaison avec la résistance interne de l'étage de réception (5), forme la deuxième impédance.

**10.** Débitmètre à ultrasons selon l'une des revendications précédentes,
pour lequel le débitmètre à ultrasons est alimenté par batterie.

**11.** Débitmètre à ultrasons selon l'une des revendications 1 à 9,
pour lequel le débitmètre à ultrasons est un débitmètre à ultrasons à 2 fils.

Fig. 1

Fig. 2

Fig. 3a

Fig. 3b

V(out_1)

Fig. 4

V(out_2)

Fig. 5

V(out)

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19810798 A1